# EUROPEAN PATENT APPLICATION

(11) **EP 2 706 344 A1**
(43) Date of publication of application: **12.03.2014**
(21) Application number: 12183122.6
(22) Date of filing: 05.09.2012
(51) Int. Cl.: G01N 15/02, G01N 15/04, G01N 23/20

(54) **A system for measuring a particle size distribution of particles of a particulate matter**

(71) Applicant: Paul Scherrer Institut, 5232 Villigen (CH)
(72) Inventor: Testino, Andrea, 5303 Würenlingen (CH)
(74) Representative: Fischer, Michael

(57) **Abstract**

It is an objective of the present invention to provide a system for measuring the particle size distribution of the particles of a particulate matter and, simultaneously, its crystalline nature.

This objective is achieved according to the present invention by a system for measuring the particle size distribution of the particles of a particulate matter; comprising:
a) a particle separation unit (4), such as a decanter unit, a centrifugal unit or a magnetic/electric field unit, being designed to force the particles (10a, 10b) to move through a moderating agent (8), such as liquid or a suspension;
b) a radiation source (12) and a respective detector (14) enabled to measure dynamically the transmitted and/or particle absorbed amount of the incident light in at least a section of said particle acceleration unit (4), said measurement being preferably performable during predetermined time intervals;
c) a radiation source (12) and a respective detector (14) enabled to simultaneously measure dynamically the beam - particle interaction, such as diffraction pattern, of the particles (10a, 10b) moving along at least a section of said particle acceleration unit (4), said measurement being preferably performable during predetermined time intervals.

The present system therefore allows to measure both the particle size distribution as well as the crystalline nature of the powders at the same time thereby achieving a higher resolution within a shorter investigation period as compared to the methods known so far.

## Description

The present invention relates to a system for measuring a particle size distribution of particles of a particulate matter.

Particle size distribution (PSD) is a relevant property of the particulate matter. Several applications are affected by the PSD: some of them need a very broad and homogenous distribution while others require a very narrow - ideally mono-dispersed - population of particles. Anyway, PSD has to be measured as well as other material properties such as, for instance, surface area, porosity, chemical composition and crystal phase.

Some examples for the exact knowledge on the PSD are:
a) Ceramics
   The size range of particles and the distribution of mass in each size class strongly affect the ability to sinter a ceramic powder and its forming properties as well as the pore size distribution in the finished product. Knowledge on the particle size distribution helps determine curing and bonding procedures, control pore structure, ensure adequate green body strength, and produce a final product that has the desired strength, texture, appearance and density.
b) Metal powders
   When controlling the particle size in metal powders, very specific pore characteristics can be designed into a product. Porosity characteristics in metals often are very important criteria for the achievable product performance. Similar to ceramics, the particle size distribution is critical to green body and final product strength and density.
c) Geological/Soil Science
   The grain size affects the moisture-holding capacity of soil, its drainage rate, and the soil's ability to hold nutrients. The grain size is known to be directly related to the transport of sediment.
d) Cosmetics
   The appearance, application, and packaging of cosmetics are influenced by the particle size distribution of base powders, such as talc, and the pigments used for coloring.
e) Pigments
   The particle size alone is related to the tinting strength of a colour. The more the tinting strength goes up, the less quantity of pigment is needed to produce a required color intensity. The particle size can also affect the hiding power of the paints. Further, the particle size distribution is relevant for gloss, texture, color saturation, and brightness.
f) Catalysts
   The particle size of the catalytical active components affects the catalytic activity and selectivity of a metal or a metal oxide for the catalytic reactions, in particular for structure-sensitive catalytic processes..
g) Construction materials
   The particle size of cement has a strong influence on the setting time and the final strength characteristics of the finished concrete.
h) Minerals and inorganic chemicals
   The reactivity of materials can be tremendously influenced by the exposed surface area and thus particle size distribution can be an important reaction parameter.
i) Abrasives
   The size distribution of abrasive grains and powders is of fundamental consideration whether the material can be used in slurries, dry blasting, or bonded abrasive tools. Small bandwidth in particle size leads to precise flow rates through blast machines.
k) Waste Treatment
   Waste treatment is resulting in waste treated residues, such as ashes and dusts. The save storage and/or further use of such materials, e.g. in constructions and buildings depends on the reactivity of the materials, their surface area, and therefore on the particle size distribution.

Very often, a particulate system is composted by more than one crystal phase (e.g. TiO₂ as anatase and rutile or a mixture of crystalline and amorphous phases), particles with more than one shape (e.g. spherical and elongated particles), or a mixture of single crystals and poly-crystals. All these features are generally highlighted by XRD (X-ray diffraction) analysis. The XRD analytical information refers to the entire sample, i.e. averaged by the investigated sample volume. As a result, a series of key material properties linking a specific particle size and its crystalline properties are not accessible.

In today's experimental setups, one usually measures the particle size distribution and subsequently, off-line, the X-ray diffraction. For instance, particles can be sorted in size by sieving or decantation methods and X-ray diffraction can be performed on the collected powders. Such a methodology is rather time-consuming and allows only a limited number of size classes to be investigated thereby limiting the resolution of the analysis. Further, this methodology could require a relevant amount of powders. Moreover, technical difficulties could be easily figured out for samples composed by sub-micrometer particles.

It is therefore an objective of the present invention to provide a system for measuring the particle size distribution of a particulate matter and, simultaneously, collection of crystallographic information by particle class size with high resolution, short analysis time, and without using relevant amounts of powders.

This objective is achieved according to the present invention by a system for measuring the particle size distribution of the particles of a particulate matter; comprising:
a) a particle separation unit, such as a decanter unit, a centrifugal unit or a magnetic/electric field unit, being designed to force the particles to move through a moderating agent, such as a fluid (a liquid or a gas or a suspension);
b) a radiation source and a respective detector enabled to measure dynamically the transmitted and/or particle absorbed amount of the incident radiation in at least a section of said particle separation unit, said measurement being preferably performable during predetermined time intervals;
c) a radiation source and a respective detector enabled to simultaneously measure dynamically the radiation - particle interaction, such as X-ray diffraction pattern, of the particles moving along at least a section of said particle separation unit , said measurement being preferably performable during predetermined time intervals.

The present system therefore allows to measure both the particle size distribution as well as the crystalline nature of the powders at the same time thereby achieving a higher resolution within a shorter investigation period as compared to the methods known so far. The term "particle separation unit" is meant to define any unit that has the ability to force the particle to move along a predetermined force vector. The force thereby could be the gravitational force, centrifugal force, magnetic field strength, electric field strength, physico-chemical interaction or similar forces. The radiation source could be an X-ray source, such as standard X-ray tube or a synchrotron, or a neutron source or particle beam source, such as proton beam source.

A preferred embodiment could be a disk centrifuge and an X-ray beam passing through the suspension kept in the spinning disk of the disk centrifuge. Particles are accelerated by the centrifugal force and decant. The X-ray signal is collected by the 2D detector and the PSD can be calculated as well as the crystalline nature determined.

The present invention therefore can be preferably a combination of an X-ray photocentrifuge and an X-ray diffractometer. The X-ray beam and the detector are respectively, bright and sensitive enough to allow the acquisition of diffraction pattern with a time frame compatible with the decantation time of the particles. Decantation time can be tuned by the disk speed or the density of the suspension and may be in the order to tens of minutes. The patterns are collected within a time frame that is on the order to tens of seconds, allowing the full XDR analysis of each particle size class. Therefore, the new combination - hereinafter called PSXD - allows the acquisition of the material properties with a level of details that is not possible to be achieved with the prior art set-ups.

The new PSXD will positively affect the methods and protocols for material characterization. Two kinds of instruments are envisionable:
a) An advanced high resolution instrument that makes use of synchrotron light and advanced detectors. This setup can be developed at a dedicated beamline in order to build reference installations having optimized hard- and software; and
b) Commercial lab-scale equipment with standard X-ray source and ad-hoc detector; since both technologies (X-ray photocentrifuge and X-ray diffractometers) used to build a PSXD system are quite well established, commercial lab-scale instruments are available in a short-term timeframe.

Therefore, in a further preferred embodiment of the present invention, the light source and the X-ray source may be just one single X-ray emitter, such as an X-ray tube or a synchrotron. Accordingly, the detector has to be available for both direct absorption and diffraction measurements.

A further preferred embodiment of the present invention can be achieved when the predetermined time intervals for both measurements are matching each other. Therefore, both measurements are executed within identical time intervals allowing to relate the absorption signal directly to the diffraction signal and vice versa.

Preferred embodiments of the present invention are hereinafter discussed in more detail with reference to the following drawings.
- Figure 1: shows schematically the working principle of a PSXD system;
- Figure 2: illustrates schematically the data processing after image generation with the PSXD system of Figure 1;
- Figure 3: shows a qualitative comparison for the data achieved with a standard PSD system (left side) and a PSXD system (right side) for a powder comprising amorphous and crystalline material;
- Figure 4: shows a qualitative comparison for the data achieved with a standard PSD system (left side) and a PSXD system (right side) for a powder comprising two crystalline materials;
- Figure 5: shows a qualitative comparison for the data achieved with a standard PSD system (left side) and a PSXD system (right side) for a powder comprising single crystalline and poly-crystalline materials; and
- Figure 6: shows a qualitative comparison for the data achieved with a standard PSD system (left side) and a PSXD system (right side) for a powder comprising equiaxed crystals and non-equiaxed crystals.

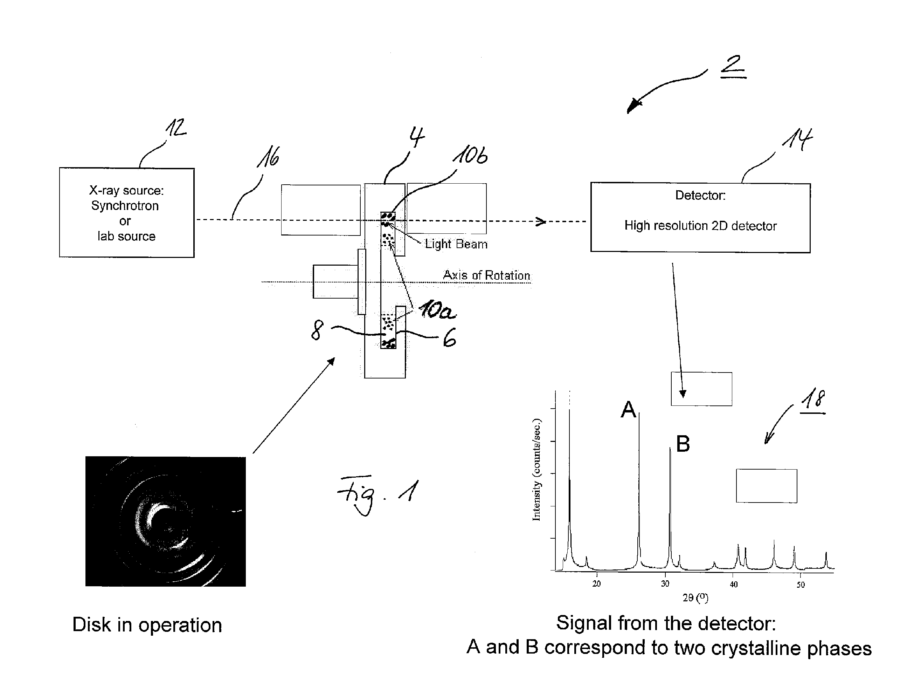

Figure 1 shows the working principle of a PSXD system 2. The PSXD system 2 comprises as particle separation unit a centrifugal disk 4 comprising a decantation chamber 6 filled with a liquid 8 comprising powder particles 10a, 10b to be analyzed for its size distribution. In the present example, the particles 10a are significantly smaller than the particles 10b which are in the drawing already decanted for that reason. The PSXD system 2 further comprises as radiation source an X-ray source 12, e.g. a standard X-ray tube or a synchrotron, and a high resolution 2D X-ray detector 14. During the examination, the disk 4 rotates thereby effecting a decantation of the particles 10a, 10b. An X-ray beam 16 emitted by the X-ray source 12 passes in a distinct area through the centrifugal disk 4 thereby delivering both an absorption signal and a diffraction signal to the detector 14. An example for the intensity distribution for the X-ray diffraction signal is shown in an intensity image 18 shown in the lower right corner of Figure 1. Despite the size distribution of the powder investigated, two peaks A and B indicate the presence of two different diffraction angles which correspond to two crystalline phases in the powder.

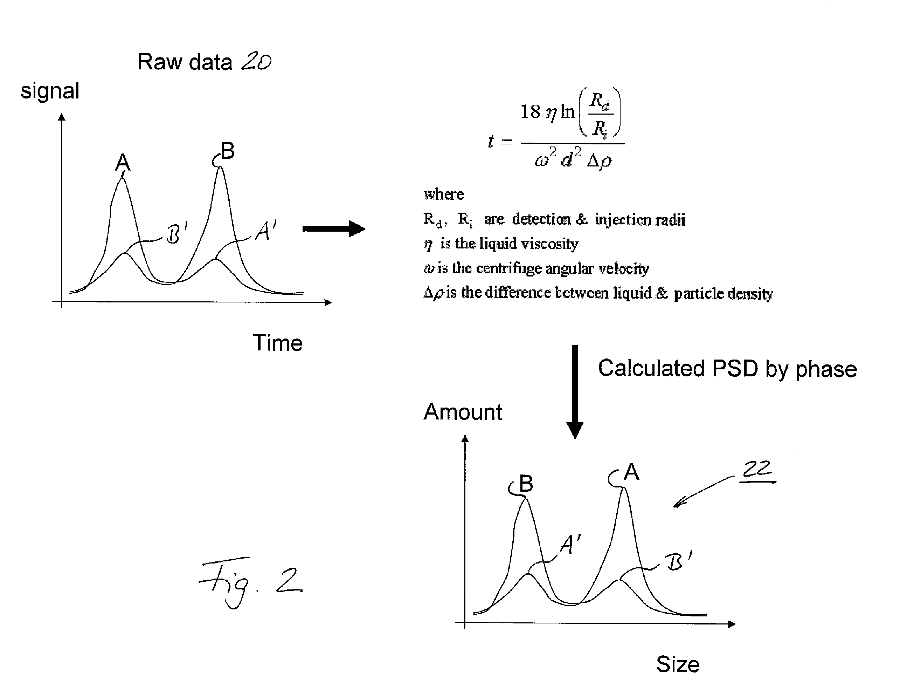

Figure 2 now illustrates the post-processing of the detected data. Raw data is shown in the upper left corner representing to courses each having a significant peak A and B resp. and two smaller peaks A' and B' respectively. The formula given in Figure 2 allows to determine the diameter of the particles 10a, 10b decanting in the liquid 8. In this formula, R_{d} and Rᵢ are detection and injection radii resp., η is the viscosity of the liquid 8, ω is the centrifugal speed of the disc 4 and Δp is the difference between the density of the liquid 8 and the particles 10a, 10b.

The result of the evaluation of the raw data 20 with the formula is shown in an image 22 showing the calculated PSD data by phase. The peaks A and B and A' and B' have now changed their positions since the x-axis now represents the size of the particles. As qualitatively shown in Figure 1, bigger particles 10b tend to pass the region of interest (where the X-ray beam 16 passes through the liquid 8 with the decanting particles 10a, 10b) earlier than smaller particles.

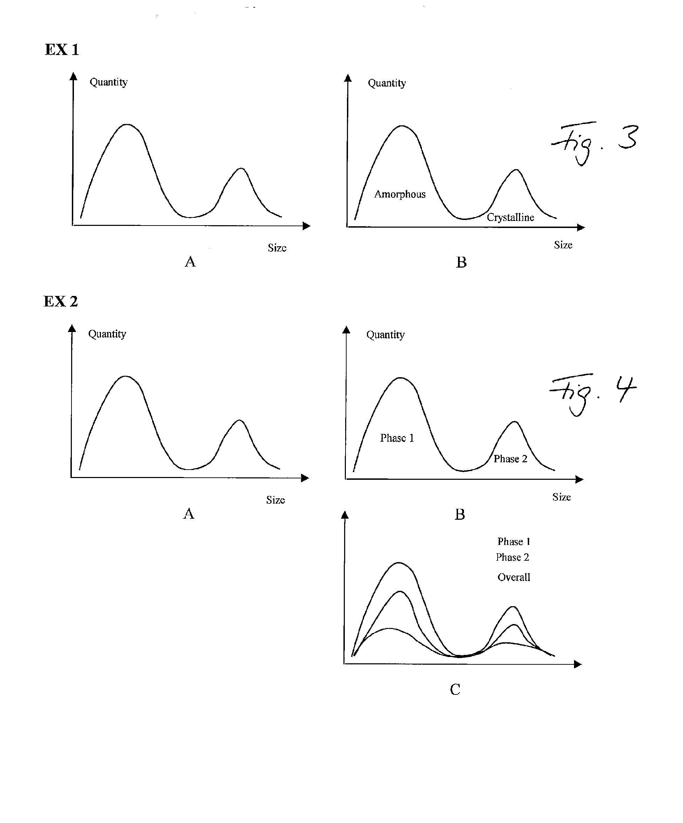

Figure 3 shows a qualitative comparison for the data achieved with a standard PSD system (left side) and a PSXD system (right side) for a powder comprising amorphous and crystalline material. The simultaneous XRD data reveals not only the presence of two maxima for the size of the particles but also an assignment of different particle properties at the two maxima. The bigger particles show in the present example a regular pattern in XRD image therefore being labeled as crystalline particles wherein the smaller particles did not show specific diffraction reflexes and are therefore labeled amorphous.

Figure 4 shows a qualitative comparison for the data achieved with a standard PSD system (left side) and a PSXD system (right side) for a powder comprising two crystalline materials. The PSXD image shows two peaks for different particle size which simultaneously showed also different diffraction pattern at specific angles in the simultaneously acquired XRD image. Further, lower right side image additionally shows that the two phases are distributed over the two major particles sizes at different occurrence. A practical example for this behaviour is a mixture of TiO₂ anastase and TiO₂ rutile. Even more than two different phases could be detected, too, if any.

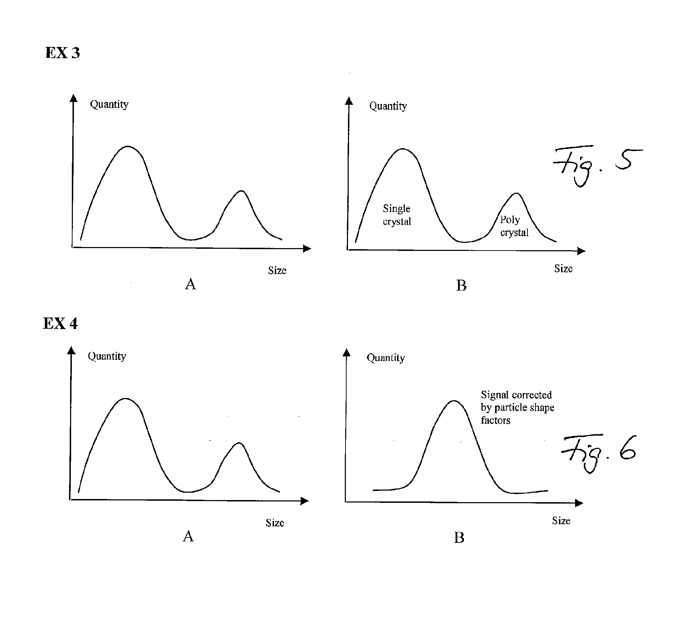

Figure 5 shows a qualitative comparison for the data achieved with a standard PSD system (left side) and a PSXD system (right side) for a powder comprising single crystalline and poly-crystalline materials. The powder particles may be composed by single crystals or poly-crystals. From the line broadening of the XRD patterns, it is possible to calculate the crystallite size. Combining the crystallite size and the particle size, it is here possible to identify single crystal particles or agglomerates of many crystals or mesocrystalline particles.

Figure 6 shows a qualitative comparison for the data achieved with a standard PSD system (left side) and a PSXD system (right side) for a powder comprising equiaxed crystals and non-equiaxed crystals. The powder particles may be composed by equiaxed crystals (e.g. spheres or cubes) or non-equiaxed shapes (e.g. rods, plates, etc.). Non-equiaxed particles decant faster with respect to equiaxed particle because they are oriented parallel to the forced centrifugal force. Preferential orientations give anomalous peak intensity in X-ray patterns. By the analysis of the preferential orientation, it is possible to effect both a correction to the PSD and an estimation on the particle shape. This analysis may be done for each crystalline phase in suspension. An example is again Ti02 anatase (equiaxed) and Ti02 rutile (rods).

The present PSXD system 2 therefore allows to measure both the particle size distribution as well as the crystalline nature of the powders at the same time thereby achieving a higher resolution within a shorter investigation period as compared to the methods known so far.

## Claims

1. A system (2) for measuring a particle size distribution of particles (10a, 10b) of a particulate matter; comprising:
a) a particle separation unit (4), such as a decanter unit, a centrifugal unit or a magnetic/electric field unit, being designed to force the particles (10a, 10b) to move through a moderating agent (8), such as liquid or a suspension;
b) a radiation source (12) and a respective detector (14) enabled to measure dynamically the transmitted and/or particle absorbed amount of the incident radiation in at least a section of said particle acceleration unit (4), said measurement being preferably performable during predetermined time intervals;
c) a radiation source (12) and a respective detector (14) enabled to simultaneously measure dynamically the beam - particle interaction, such as diffraction pattern, of the particles (10a, 10b) moving along at least a section of said particle acceleration unit (4), said measurement being preferably performable during predetermined time intervals.

2. The system according to claim 1, wherein the radiation source of step b) and the radiation source of step c) are just one radiation sources (12), such as a X-ray tube (12) or a synchrotron, or a neutron source, or a particle beam source.

3. The system according to claim 1 or 2, wherein the predetermined time intervals for both measurements are matching each other.
